# EUROPÄISCHE PATENTSCHRIFT

(11) **EP 2 134 497 B1**
(45) Veröffentlichungstag und Bekanntmachung des Hinweises auf die Patenterteilung: **09.06.2010**
(21) Anmeldenummer: 08773926.4
(22) Anmeldetag: 09.07.2008
(51) Int. Cl.: B23K 1/00, B23K 1/012

(54) **ANLAGE UND VERFAHREN ZUM LÖTEN**
INSTALLATION AND PROCESS FOR SOLDERING
SYSTÈME ET PROCÉDÉ DE BRASAGE

(30) Priorität: 24.08.2007 DE 102007040037
(43) Veröffentlichungstag der Anmeldung: 23.12.2009
(73) Patentinhaber: Modine Manufacturing Company, Racine, Wisconsin 53403-2552 (US)
(72) Erfinder: OPFERKUCH, Frank, 72669 Unterensingen (DE)
(74) Vertreter: Wolter, Klaus-Dietrich
(86) Internationale Anmeldenummer: PCT/EP2008/005584
(87) Internationale Veröffentlichungsnummer: WO 2009/026988

(56) Entgegenhaltungen:
- EP-A- 1 029 625
- CA-C- 1 295 114
- DE-A1- 10 227 055
- US-A1- 2003 111 459

## Beschreibung

Die Erfindung betrifft eine Anlage zum Löten oder zur Wärmebehandlung von Werkstücken unter einer Schutzgasatmosphäre, mit einer Werkstücktransportvorrichtung, mit einem Eintritt in die Anlage und mit einem Austritt aus der Anlage, mit einem separat vom Schutzgasstrom geführten Brenngasstrom, welcher den Schutzgasstrom auf Arbeitstemperatur bringt, mit einer die Anlage umgebenden Isolation. Ferner betrifft die Erfindung ein entsprechendes Verfahren zum Löten oder zur Wärmebehandlung.

Aus der DE 102 27 055B4 ist ein Hartlötverfahren zum Fügen von Bauteilen aus Aluminium oder aus einer Aluminiumlegierung bekannt. In der Veröffentlichung wird es als vorteilhaft angesehen, ein Heißgas, welches auch das Schutzgas sein kann, mittels elektrischer Aufheizung zur Verfügung zu stellen. Auf diese Weise wird dort ein prozesssicheres und schnelles Hartlötverfahren geschaffen. Die dort vorgesehene Aufteilung in zwei Erwärmungsphasen gewährleistet das schnelle, wirtschaftliche Aufheizen und soll angeblich gegenüber einer Ofenerwärmung - was immer damit gemeint sein könnte - zu einem insgesamt geringeren Energieeinsatz führen.

Aus der wesentlich älteren DE 2 254 769 A ist ein anderes Lötverfahren und ein Lötofen zum flussmittelfreien Löten von Aluminiumwerkstücken unter Schutzgas bekannt geworden. Auch dort soll das Schutzgas vorzugsweise elektrisch aufgeheizt werden. Der Lötofen weist eine Vorheizkammer auf, in der die Werkstücke auf etwa 500°C gebracht werden, eine Lötkammer, in der die eigentliche Verlötung unter Schutzgas ausgeführt wird und unter anderem auch eine Abkühlkammer.

Der einleitend bereits aufgeführte Oberbegriff des Anspruchs 1 ergibt sich aus der US 5 147 083, in der bei einer Lötanlage vorgesehen wird, das Schutzgas, welches Stickstoff ist, mit Hilfe eines Brenn - oder Heizgases auf die Löttemperatur zu bringen. Die bekannte Lötanlage ist in Zonen aufgeteilt, wobei für jede Zone ein Brenner und eine serpentinenartige Brenngasleitung sowie eine perforierte Schutzgaseinströmleitung vorgesehen sind. Ferner befindet sich in jeder Zone ein Ventilator, um eine allseitige Beaufschlagung der durchlaufenden Werkstücke mit dem auf Löttemperatur erhitzten Schutzgas zu gewährleisten.

Eine energiesparende Art und Weise der Erzeugung heißer Ströme kann bekanntlich durch thermische Kopplung mit im Gegenstrom geführten exothermen Reaktionsströmen erreicht werden, wie es beispielsweise in der DE 199 53 233 A1 oder in der wesentlich älteren DE 34 02 713 A1 beschrieben worden ist. Mit solchen Verfahren werden u. a. Synthese - oder auch Spaltprodukte erzeugt.

Eine energiesparende Methode zum Löten kann ferner dadurch geschaffen werden, dass an den Lötstellen eine exotherme Reaktion zwischen einer an der Lötstelle vorhandenen Substanz und Bestandteilen einer Stickstoffatmosphäre erzeugt wird. Ein Beispiel dazu wurde in der WO 2007/054306 aber auch bereits in wesentlich älteren Veröffentlichungen beschrieben.

Aus der JP 05-115934 ist die Verlötung von Wärmetauscherrohren unmittelbar im Anschluss an die Herstellung der Rohre aus endlosem Blechband bekannt. Diese Art der Herstellung ist wirtschaftlich. Sie wird oft als "inline - brazing" bezeichnet. Dort ist als Lötstation jedoch lediglich eine Induktionsschleife angegeben worden.

Die Aufgabe der vorliegenden Erfindung besteht in der Weiterentwicklung einer Anlage der oben erwähnten Art und eines Verfahrens zum Löten oder zur Wärmebehandlung von Werkstücken, um unter anderem den Energieeinsatz zum Betreiben der Anlage zu reduzieren.

Diese Aufgabe wird mit einer Anlage gelöst, die die Merkmale des Anspruchs 1 aufweist und auch mit einem Verfahren, das die Merkmale des Anspruchs 15 besitzt. Weil der Brennstoff- oder der Brenngasstrom und der Gasstrom angepasste Wärmekapazitäten (Wärmeaufnahmevermögen / Wärmeabgabevermögen) besitzen und im Gegenstrom durch die Anlage leitbar sind, wird wesentlich weniger Energie benötigt, um die Anlage zu betreiben. Der Gasstrom ist vorzugsweise ein Schutzgasstrom, der inerte Wirkungen hat. Das Wärmeaufnahmevermögen des Schutzgasstromes, zuzüglich dem Wärmeaufnahmevermögen des durch die Anlage laufenden Werkstückes sollte etwa dem Wärmeabgabevermögen des Brenngasstromes entsprechen. Der die Anlage durchströmende Schutzgasstrom ist zum Eintritt - jedenfalls zur Wiederverwendung - zurückführbar. Die Rückführung des Schutzgasstromes geschieht so, dass die Temperatur des Schutzgases am Austritt von beispielsweise 60 - 100°C, am Eintritt wieder zur Verfügung steht, abgesehen von nicht vermeidbaren Verlusten. Konkret ist die Rückführleitung für das Schutzgas mit einer guten Wärmeisolation versehen worden. Wenn möglich, kann diese Leitung auch innerhalb der Isolation der Anlage angeordnet sein. Dem am Eintritt eintretenden zurückgeführten Schutzgas wird bedarfsweise neues Schutzgas hinzugefügt, um Verluste auszugleichen.

Der Energieverbrauch wird auch deshalb ganz deutlich reduziert, weil praktisch kein Abgas mit hoher Temperatur und auch kein Schutzgas an die Umwelt abgegeben werden.

Eine Weiterbildung sieht vor, dass ein Katalysator, beispielsweise eine Plattenkonstruktion oder eine Wabenkonstruktion, beschichtet mit einem geeigneten Edelmetall im Strömungsweg des Brenngases angeordnet ist, der die Wirkung hat, dass die Verbrennungstemperatur des Brenngases, beispielsweise eines Methan - LuftGemisches, sich beim Eintritt in den Katalysator nahezu schlagartig erhöht. Bei dem Katalysator kann es sich auch um eine katalytisch wirksame Substanz handeln. Die katalytisch wirksame Substanz kann beispielsweise ein geeignetes Mischoxid sein, welches als Vollkatalysator bereitgestellt werden kann, d. h., ohne dass - wie im Falle eines Edelmetallkatalysators - eine aufwendige Beschichtung eines Trägers erforderlich ist. Als Folge der Umsetzung des Brenngases am Katalysator steigt die Temperatur des Brenngases an, was dazu führt, dass auch die Ofenwand erhitzt wird. Als Folge der heißeren Ofenwand erwärmt sich dann auch das Schutzgas, beispielsweise Stickstoff, und auf Grund des intensiven Kontaktes zwischen Schutzgas und

Werkstück letztendlich auch das Werkstück selbst, beim Löten zweckmäßigerweise z. B. bis auf eine Temperatur oberhalb der Solidustemperatur des eingesetzten Lotes.

Durch entsprechende Auslegung des Katalysators und Mengenregelung des Brenngases bzw. auch Regelung von dessen Zusammensetzung, wird die Wärmeproduktionsrate der am Katalysator vor sich gehenden exothermen Reaktion eingestellt. Es können höhere Durchlaufgeschwindigkeiten des Werkstückes durch die Anlage vorgesehen werden, was in vielen Fällen gewünscht wird, um den Lötprozess zu beschleunigen.

Der Katalysator kann sich über den gesamten Wärmebehandlungsbereich, beispielsweise den Lötbereich, erstrecken. Es können auch mehrere Katalysatoren in dem erwähnten Bereich vorgesehen werden. Die Position des oder der Katalysatoren ist veränderbar, um die Anlage zur Lötung oder zur Wärmebehandlung verschiedener Erzeugnisse bedarfsgerecht, das heißt, abgestimmt auf die Bedürfnisse der jeweiligen qualitätsgerecht zu behandelnden Erzeugnisse, einstellen zu können. Die erwähnten Bedürfnisse hängen unter anderem von der konkreten Formgebung der Erzeugnisse ab.

Nach dem Verlassen des Katalysators wird das dann vorliegende verbrannte Brenngas (Abgas) durch weitergehenden Wärmeaustausch mit dem in die Anlage eintretenden Schutzgas abgekühlt, somit wird das Schutzgas dabei gleichzeitig vorgewärmt. Das Abgas verlässt die Anlage mit einer Temperatur im Bereich von beispielsweise 60 - 100°C.

Die vorgeschlagene Anlage stellt sich als relativ schlanker Tunnel aus ineinander vorzugsweise koaxial angeordneten Röhren dar, der sich über eine beträchtliche Länge erstrecken kann. Die stirnseitigen Eintritts -und Austrittsöffnungen der Anlage sind deshalb im Vergleich zu deren Länge relativ klein, weshalb die Aufrechterhaltung der inerten Atmosphäre in der Löt - bzw. der Wärmebehandlungszone wesentlich unterstützt wird. Die Anlage muss sich nicht geradlinig erstrecken. Sie kann beispielsweise kreisartig oder in Schleifen angeordnet werden, um an örtliche Vorgaben der Fertigungsstätte angepasst zu sein. In der bevorzugten Ausführung sind die Röhren - wie erwähnt - koaxial angeordnet, wobei ein Ringraum zwischen der inneren und der äußeren Röhre ringsherum etwa dieselbe Höhe aufweist. Es kann allerdings Ausführungen geben, die einen Abstand zwischen der Längsachse der inneren Röhre und der Längsachse der äußeren Röhre aufweisen, die also in diesem Sinne nicht koaxial sondern lediglich ineinander angeordnet sind und demnach auch nicht ringsherum die gleiche angesprochene Höhe des Ringraumes besitzen. Die Anlage kann beispielsweise als Lötanlage für aus Blechstreifen herstellbare endlose Flachrohre eingesetzt werden. Nach dem Löten des endlosen Flachrohres können einzelne Flachrohre entsprechender Länge abgeschnitten und zur Herstellung von beispielsweise Wärmetauschern verwendet werden. Für diesen Zweck wird die Lötanlage mit einer Walzenstraße gekoppelt, die der umformtechnischen Herstellung des endlosen Flachrohres dient. In gleicher Weise können allerdings auch Untersektionen des Wärmetauschers gelötet werden, die an einer oder an beiden Breitseiten des Flachrohres mit Wellrippen versehen sein können. Nach dem Löten werden Untersektionen entsprechender Länge abgeschnitten und zum Wärmetauscher zusammengesetzt.

Das vorgeschlagene Verfahren kann mit aus dem Stand der Technik bekannten Maßnahmen kombiniert werden, um den Energieverbrauch weiter zu reduzieren.

Die Erfindung wird in einem Ausführungsbeispiel erläutert, wozu auf die beiliegenden Skizzen Bezug genommen wird.

Die Fig. 1 zeigt ein erstes Prinzip einer Anlage mit zugehörigem Temperaturprofil. Die Fig. 2 zeigt ein zweites Prinzip einer Anlage mit zugehörigem Temperaturprofil.

Die Fig. 3 zeigt ein vom Schutzgasstrom umströmtes Flachrohr.

Die Fig. 4 zeigt den Querschnitt eines bevorzugten Flachrohres.

Die Fig. 5 zeigt ein Wärmetauschernetz aus Flachrohren und Rippen.

Die Fig. 6 zeigt eine Walzenstraße im Prinzip, auf der ein endloses Flachrohr, beispielsweise gemäß der Fig. 4, hergestellt wird.

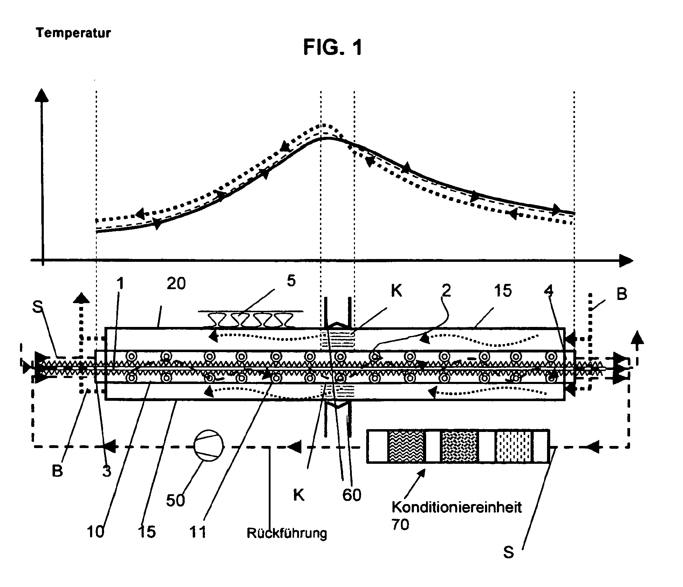

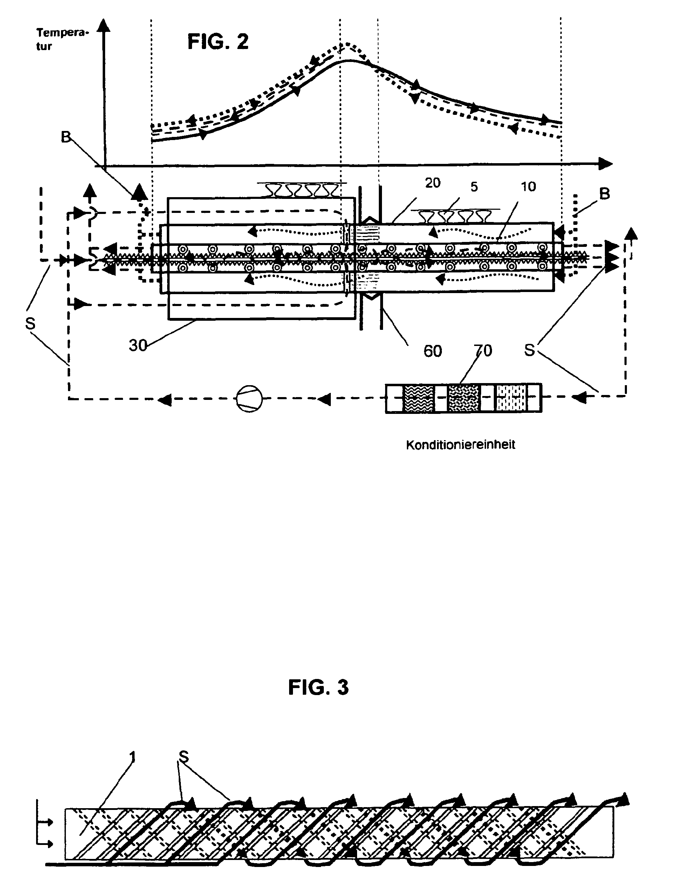

Die in den Fig. 1 und 2 gezeigten Anlagen können Lötanlagen, wie zum Beispiel CAB - Hartlötanlagen, oder Anlagen zur Wärmebehandlung von vorzugsweise metallischen Werkstücken sein. Bei den Werkstücken kann es sich auch um einzelne Stücke handeln, die die Anlage kontinuierlich oder auch diskontinuierlich durchlaufen und dabei entsprechend behandelt werden.

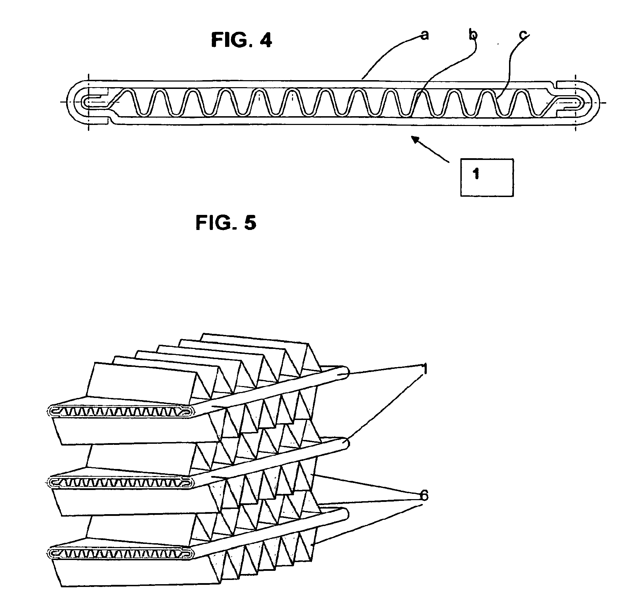

Die Anlage gemäß den Fig. 1 und 2 besteht aus zwei koaxial zueinander angeordneten Röhren **10, 20.** In der inneren Röhre **10** befindet sich die Schutzgasatmosphäre, beispielsweise Stickstoff, die durch den diese Röhre **10** von links nach rechts durchströmenden Schutzgasstrom **S** (Pfeile mit gestrichelter Linienführung) ausgebildet wird. Des Weiteren befindet sich in dieser inneren Röhre **10** die Transportvorrichtung **2,** dargestellt durch zahlreiche Rollensätze. Zwischen den Rollensätzen läuft das Werkstück **1,** welches im gezeigten Ausführungsbeispiel ein endloses Flachrohr aus Aluminium oder aus einer geeigneten Aluminiumlegierung ist, wie es beispielsweise in der Fig. 4 im Querschnitt gezeigt wird oder auch ein Flachrohr ist, an dessen beiden Breitseiten bereits Rippen **6,** ebenfalls aus Aluminiumblech, angesetzt sind, die an diese Breitseiten angelötet werden sollen. Das zeigt rein schematisch auch bereits die Fig. 1. Dort soll also das Flachrohr, hergestellt aus drei endlosen Blechstreifen **a, b, c,** wobei zwei Blechstreifen **a, b** die Wand bilden und der dritte Blechstreifen **c** ein Innenteil des Flachrohres darstellt, in sich gelötet werden und gleichzeitig sollen die Rippen **6 -** falls vorhanden - außen angelötet werden. Die Anmelderin möchte diesbezüglich auf die ältere deutsche Patentanmeldung mit dem Aktenzeichen DE 10 2006 002 932.1 hinweisen, aus der zu sehen ist, dass nach dem Löten Untersektionen, bestehend aus einem Flachrohr und zwei gewellten Rippen **6,** abgeschnitten und zur Herstellung eines Wärmetauschers weiter verarbeitet werden. Die Fig. 5 zeigt einen Ausschnitt aus einem Wärmetauschernetz, beispielsweise für einen Kühlflüssigkeitskühler. Die mit Kühlluft durchströmten Rippen **6** wurden dort so angeordnet, dass sich die Wellen der aneinander anliegenden Rippen **6** zwischen zwei Flachrohren **1** kreuzen, was die Wärmetauscheffizienz des Wärmetauschers anheben kann.

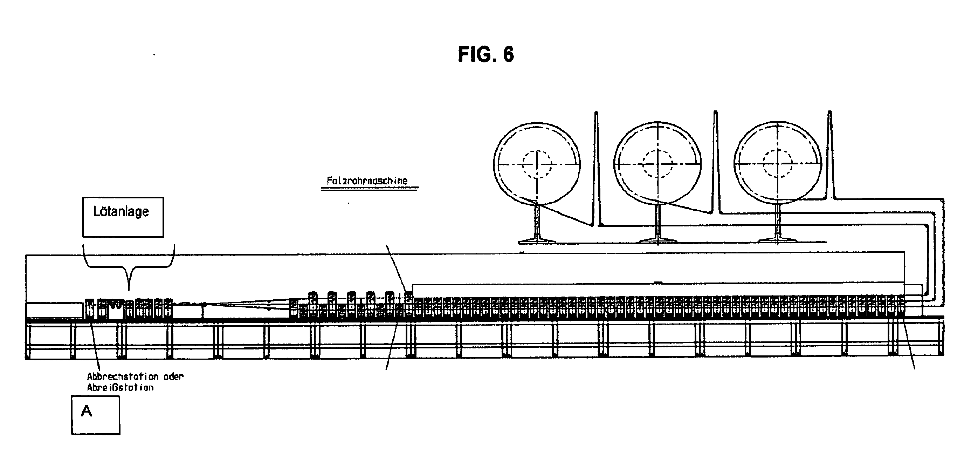

Im hier zu beschreibenden Ausführungsbeispiel soll die Lötanlage mit einer Walzenstraße gekoppelt sein, die in der Fig. 6 ebenfalls schematisiert dargestellt ist. Diese Darstellung wurde der älteren Patentanmeldung mit dem Aktenzeichen DE 10 2006 033 568.6 entnommen. Die Lötanlage gemäß Fig. 1 befindet sich etwa an der in der Fig. 6 bezeichneten Position, jedenfalls mit ihrem Austritt **4** vor der Abtrennstation **A** für einzelne Flachrohre und mit ihrem Eintritt **3** zur Walzenstraße hin, um das ankommende Flachrohr **1** aufnehmen zu können.

Es soll nicht weiter darauf eingegangen werden, dass das endlose Flachrohr **1** zum Zwecke der Verlötung entsprechenden Vorbehandlungen, wie Entfetten, gegebenenfalls einer Flussmittelbehandlung, Trocknung usw. unterzogen wird. Die Verwendung von Flussmittel soll aber möglichst vermieden werden. Des Weiteren soll jedoch ausgeführt werden, dass es sich bei dem Flachrohr um ein solches mit extrem geringer Rohrwanddicke im Bereich von 0,03 - 0,15 mm handeln kann. Die Dicke des Innenteils ist nicht größer als 0,03 - 0.10 mm. Solche Flachrohre stellen eine geringe thermische Masse dar, was im vorliegenden Zusammenhang günstig für den Aufheizvorgang ist.

Zurück zur Fig. 1, aus der weiter zu sehen ist, dass der Brenn - oder Heizgasstrom **B** (Pfeile mit punktierter Linienführung) von rechts nach links durch den Ringraum **15** zwischen der bereits erwähnten inneren Röhre **10** und der äußeren Röhre **20** strömt. Somit befinden sich der Schutzgasstrom **S** und der Brenngasstrom **B** strömungstechnisch gesehen im Gegenstrom. Die Röhrenwand **11** der inneren Röhre **10** besitzt möglichst gut Wärme leitende Eigenschaften, damit die Wärmeenergie schnell und effizient vom Brenngasstrom **B** auf den Schutzgasstrom **S** und umgekehrt übertragen werden kann. Ein Querschnitt der Anlage wurde nicht gezeigt. Die Röhren **10, 20** können - aber müssen nicht unbedingt - einen kreisförmigen Querschnitt besitzen.

Im Ringraum **15,** etwa in der Mitte der Lötanlage, ist ein Katalysator **K** durch parallele Striche angedeutet worden. Die Oberfläche der Platten ist beispielsweise mit Platin beschichtet, ein Edelmetall, welches die eigentliche Katalysatorwirkung erzeugt. Der durch den ankommenden Schutzgasstrom **S** bereits vorgewärmte Brenngasstrom **B** trifft auf den Katalysator **K** und durchströmt denselben. Es findet dort eine relativ plötzlich ablaufende exotherme Reaktion statt, die mit einem drastischen Temperaturanstieg einhergeht, der sich durch eine katalysierte Verbrennungsreaktion einstellt. Am Katalysator **K** ist eine elektrische Stütz - bzw. Anfahrheizung **60** angeordnet, die den Katalysator **K** aktiviert, das heißt, auf die katalytische Zündtemperatur des Brenngases anhebt. Nach dem Zünden kann die elektrische Heizung **60** abgestellt werden. In dem Bereich des Katalysators **K** befindet sich demnach auch der Bereich in der inneren Röhre **10,** in dem die höchsten Temperaturen im Schutzgasstrom **S** vorliegen, und wo die Verlötung des Werkstücks **1** schließlich stattfindet. Das im Katalysator **K** verbrannte Brenngas **B,** also das Abgas, besitzt dort immer noch eine sehr hohe Temperatur. Es ist auf jeden Fall bestens geeignet, den in der inneren Röhre **10** vom Eintritt **3** her ankommenden Schutzgasstrom **S** vorzuwärmen. Das die Lötanlage an der linken Seite der Fig. 1 verlassende Abgas **B** hat dort lediglich noch eine Temperatur im Bereich von etwa 60 - 100 °C. In diesem Temperaturbereich liegt auch das auf der rechten Seite ankommende, "verbrauchte" Schutzgas **S,** welches von dort zur Wiederverwendung zurückgeführt wird. In der isolierten Rücklaufleitung wurde eine Fördereinrichtung **50** angedeutet. Man wird darauf achten, dass stark verschmutztes Schutzgas **S** nicht zurückgeführt oder vorher gereinigt wird.

Dem Kreislauf wird deshalb neues Schutzgas **S** in ausreichender Menge hinzugefügt. In den Fig. 1 und 2 ist eine Konditioniereinheit **70** angedeutet worden, die in Richtung des strömenden Schutzgases **S** einen Filter, einen Getter und einen weiteren Katalysator aufweisen kann, um das Schutzgas **S** neu zu konditionieren, das heißt beispielsweise, um schädliche Bestandteile auszufiltern, oder zu unschädlichen Bestandteilen reagieren zu lassen, und/oder um für die Wärmebehandlung hilfreiche Zusatzstoffe beizufügen. Der Getter kann in Form eines chemisch reaktiven Materials vorliegen, das beim Löten dazu dient, die Partialdrücke von unerwünschten Spurengasen im Schutzgas **S,** z. B. von Sauerstoff, durch chemische Bindung oder Sorption an das Gettermaterial, beispielsweise Graphit, zu senken.

Weiterhin können hier auch geeignete Bestandteile dem Schutzgas **S** hinzugefügt werden, die zu der in der Einleitung (WO 2007/054306) erwähnten exothermen Reaktion direkt an den Lötstellen beitragen. Dazu befindet sich dann an den Lötstellen eine exotherm reagierende Substanz in ausreichender Menge. Somit kann das hier vorgeschlagene Verfahren mit dem an sich bekannten Verfahren kombiniert werden und zu weiteren Energieeinsparungen führen.

Die Isolation **5,** die sich um die äußere Röhre **20** herum erstreckt, wurde nur angedeutet. Zahlreiche andere Details wurden nicht in den Abbildungen dargestellt. So versteht es sich, dass sowohl der Brenngasstrom **B** als auch der Schutzgasstrom **S** entsprechende Ablenkungen erfahren können, beispielsweise einen schlangenlinienartigen Durchströmweg aufweisen können. Aus der Fig. 3 sollte die spiralartig fortschreitende Umströmung lediglich eines Abschnittes des Flachrohres **1** mittels des Schutzgases **S** erkennbar sein.

Die Fig. 2 unterscheidet sich vom Ausführungsbeispiel gemäß Fig. 1 dadurch, dass der Schutzgasstrom **S** etwa in der Mitte der Anlage in dieselbe eingeleitet wird. Dazu wurde die Anlage mit einer weiteren (größeren) Röhre **30** ausgerüstet, die jedoch nur bis zur Einleitungsstelle des Schutzgases **S** reicht, also nicht über die gesamte Länge der Anlage reichen muss. Das Schutzgas **S** strömt auch hier im Gegenstrom mit dem Brenngas **B** und wird dabei durch das heiße Brenngas **B** bzw. durch das Abgas vorgewärmt, da auch die Röhrenwand der Röhre **20** in diesem Bereich gut Wärme leitend ausgestaltet ist. Der vorgewärmte Schutzgasstrom **S** wird im gezeigten Ausführungsbeispiel im Bereich des Katalysators **K** durch die mittlere Röhre **20** hindurch in die innere Röhre **10** eingeleitet und breitet sich in der inneren Röhre **10** nach links und rechts aus. Diese Ausführung weist unter anderem den Vorteil auf, dass der Schutzgasstrom **S** vor dem Eintritt in die heiße Zone nicht verunreinigt werden kann aber trotzdem ausreichend vorgewärmt wird.

Die Fig. 1 und 2 zeigen auch die dazugehörigen Temperaturprofile des Brenngasstromes **B,** des Schutzgasstromes **S** und des Flachrohres **1** vom Eingang **3** bis zum Ausgang **4** aus der Lötanlage anhand dreier Kurven. Es ist daraus erkennbar, dass am Eintritt **3** und am Austritt **4** die Temperaturen etwa zwischen 60 und 100°C liegen, wie bereits vorne erwähnt wurde. Sie können jedoch auch im Bereich der Umgebungstemperatur, also niedriger als angegeben, liegen. Im mittleren Lötbereich der Anlage können aufgrund der dort stattfindenden exothermen Reaktion im Brenngasstrom **B** auch oberhalb der eigentlichen Löttemperatur für Aluminiumwerkstoffe liegende Temperaturen vorliegen. Der Erfinder arbeitet daran, Durchlaufgeschwindigkeiten von 100 m/min und mehr zu realisieren.

Verbrauchtes Schutzgas **S** kann auch dem Brenngasgemisch **B** hinzugefügt werden, um dessen Wärmekapazität einzustellen, letztlich auch, um noch wirtschaftlicher im Energieverbrauch zu sein.

## Patentansprüche

1. Anlage zum Löten oder zur Wärmebehandlung von Werkstücken (1) unter einer Gasatmosphäre, mit einer Werkstücktransportvorrichtung (2), mit einem Eintritt (3) in die Anlage und mit einem Austritt (4) aus der Anlage, mit einem separat vom Gasstrom (S) geführten Brenn - oder Heizgasstrom (B), welcher den Gasstrom (S) auf Arbeitstemperatur bringt und mit einer die Anlage umgebenden Isolation (5), **dadurch gekennzeichnet, dass** der Brenn - oder Heizgasstrom (B) und der Gasstrom (S) sich etwa entsprechende Wärmekapazitäten besitzen und wenigstens über einen wesentlichen Längenabschnitt der Anlage im Gegenstrom durch die Anlage leitbar sind.

2. Anlage nach Anspruch 1, **dadurch gekennzeichnet, dass** der die Anlage durchströmende Gasstrom vorzugsweise ein Schutzgasstrom (S) ist, der vorzugsweise zum Eintritt (3) zurückführbar ist.

3. Anlage nach Anspruch 1 und 2, **dadurch gekennzeichnet, dass** wenigstens Bestandteile des verbrauchten Schutzgasstroms (S) dem Brenngasgemisch (B) hinzufügbar sind.

4. Anlage nach Anspruch 1 und/oder 2, **dadurch gekennzeichnet, dass** die Anlage wenigstens zwei ineinander angeordnete Röhren (10, 20) aufweist, wobei der Schutzgasstrom (S) durch die erste Röhre (10) strömt und der Brenngasstrom (B) durch einen Ringraum (15) zwischen der ersten (10) und der zweiten Röhre (20) strömt.

5. Anlage nach Anspruch 4, **dadurch gekennzeichnet, dass** wenigstens die erste Röhre (10) eine die Wärme gut leitende Röhrenwand (11) aufweist.

6. Anlage nach einem der vorstehenden Ansprüche, **dadurch gekennzeichnet, dass** die Isolation (5) die zweite Röhre (20) oder eine dritte Röhre (50) mittelbar oder unmittelbar umgibt.

7. Anlage nach Anspruch 1 und 6, **dadurch gekennzeichnet, dass** die dritte Röhre (50) der Vorwärmung des Schutzgases (S) und der Einleitung des Schutzgases in die erste Röhre (10) dient.

8. Anlage nach einem der vorstehenden Ansprüche, **dadurch gekennzeichnet, dass** im Ringraum (15) ein Katalysator (K) vorhanden ist, an dem die Verbrennung des Brenngasgemisches (B) stattfindet.

9. Anlage nach Anspruch 8, **dadurch gekennzeichnet, dass** die Position des Katalysators (B) im Ringraum (15) veränderbar ist.

10. Anlage nach einem der vorstehenden Ansprüche, **dadurch gekennzeichnet, dass** in der inneren Röhre (10) die Werkstücktransportvorrichtung (2) und der Behandlungsabschnitt für die Werkstücke (1) angeordnet sind.

11. Anlage nach einem der vorstehenden Ansprüche, **dadurch gekennzeichnet, dass** die Werkstücktransportvorrichtung (2) aus Rollensätzen besteht, geeignet, das Werkstück (1) zu transportieren und beispielsweise lötgerecht zusammen zu halten.

12. Anlage nach einem der vorstehenden Ansprüche, **dadurch gekennzeichnet, dass** die Transportrichtung der Werkstücke im Gegenstrom zum Brenngasstrom (B) gewählt wird.

13. Anlage nach einem der vorstehenden Ansprüche, **dadurch gekennzeichnet, dass** die Anlage eine lang gestreckte, tunnelartige Form aufweist, mit einer zigfachen Länge im Vergleich zu ihrem Durchmesser.

14. Anlage nach einem der vorstehenden Ansprüche, **dadurch gekennzeichnet, dass** die Anlage als Lötanlage in Kooperation mit einer Walzenstraße angeordnet ist, wobei das Werkstück ein endloses Flachrohr ist, welches auf der Walzenstraße aus wenigstens einem endlosen, lotbeschichteten Blechstreifen zum Flachrohr umformbar und durch die Lötanlage führbar ist, wobei die Lötung erfolgt, bevor einzelne Wärmetauscherrohre abgeschnitten werden.

15. Verfahren zum Löten oder zur Wärmebehandlung von Werkstücken unter einer Schutzgasatmosphäre, ausgeführt auf einer Anlage, in die ein Brenngasstrom (B) und - separat davon - ein Gasstrom (S) eingeleitet werden, der vom Brenngasstrom erhitzt wird, **dadurch gekennzeichnet, dass** der Brenngasstrom (B) und der Gasstrom (S) mit entgegen gesetzten Strömungsrichtungen in die Anlage eingeleitet und derart in eine Wärme tauschende Beziehung gebracht werden, dass einerseits das austretende, verbrannte Brenngas (Abgas) das eintretende Gas (S) vorwärmt und dass andererseits das austretende Gas (S) das eintretende Brenngas (B) vorwärmt.

16. Verfahren nach Anspruch 15, **dadurch gekennzeichnet, dass** der Brenngasstrom beispielsweise ein Brenngasgemisch mit einem Katalysator (K) in Kontakt gebracht wird.

17. Verfahren nach den Ansprüchen 15 und 16, **dadurch gekennzeichnet, dass** der Schutzgasstrom in eine erste Röhre (10) eingeleitet wird und dass der Brenngasstrom in einen Ringraum zwischen der ersten und einer zweite Röhre (20) der Anlage eingeleitet wird.

18. Verfahren nach den Ansprüchen 15 und 16, **dadurch gekennzeichnet, dass** der Schutzgasstrom zunächst in eine dritte Röhre (30) eingeleitet wird, die die zweite Röhre (20) umfasst, und erst in einer etwa mittleren Position der Anlage in die erste Röhre (10) eingeführt wird.

19. Verfahren nach den Ansprüchen 15 - 18, **dadurch gekennzeichnet, dass** der aus der Anlage austretende, verbrauchte Schutzgasstrom zum Eintritt in die Anlage zurückgeführt wird.

20. Verfahren nach einem der vorstehenden Ansprüche 15 - 19, **dadurch gekennzeichnet, dass** wenigstens Bestandteile des verbrauchten Schutzgasstroms dem Brenngasgemisch hinzugefügt werden.

## Claims

1. Installation for soldering or for the heat treatment of workpieces (1) in a protective gas atmosphere, having a workpiece transporting device (2), having an inlet (3) into the installation and having an outlet (4) out of the installation, having a combustion gas or heating gas flow (B) which is conducted separately from the gas flow (S) and which brings the gas flow (S) to working temperature and having an insulation (5) which surrounds the installation, **characterized in that** the combustion or heating gas flow (B) and the gas flow (S) have approximately corresponding heat capacities and can be conducted in counterflow configuration through the installation at least over a significant section of the length of the installation.

2. Installation according to Claim 1, **characterized in that** the gas flowing through the installation is preferably a protective gas flow (S) which can preferably be recirculated to the inlet (3).

3. Installation according to Claim 1 and 2, **characterized in that** at least constituents of the consumed protective gas flow (S) can be added to the combustion gas mixture (B).

4. Installation according to Claim 1 and/or 2, **characterized in that** the installation has at least two pipes (10, 20) which are arranged one inside the other, with the protective gas flow (S) flowing through the first pipe (10) and the combustion gas flow (B) flowing through an annular chamber between the first pipe (10) and second pipe (20).

5. Installation according to Claim 4, **characterized in that** at least the first pipe (10) has a pipe wall (11) with good heat conductivity.

6. Installation according to one of the preceding claims, **characterized in that** the insulation (5) indirectly or directly surrounds the second pipe (20) or a third pipe (30).

7. Installation according to Claims 1 and 6, **characterized in that** the third pipe (30) serves to pre-heat the protective gas (S) and to conduct the protective gas into the first pipe (10).

8. Installation according to one of the preceding claims, **characterized in that** a catalytic converter (K) is provided in the annular chamber (15), on which catalytic converter (K) the combustion of the combustion gas mixture (B) takes place.

9. Installation according to Claim 8, **characterized in that** the position of the catalytic converter (K) in the annular chamber (15) can be varied.

10. Installation according to one of the preceding claims, **characterized in that** the workpiece transporting device (2) and the treatment section for the workpieces (1) are arranged in the inner pipe (10).

11. Installation according to one of the preceding claims, **characterized in that** the workpiece transporting device (2) is composed of sets of rollers which are suitable for transporting the workpiece and for example holding the workpiece (1) together in a way which is suitable for soldering.

12. Installation according to one of the preceding claims, **characterized in that** the transport direction of the workpiece is selected to be counter to the flow of the combustion gas flow (B).

13. Installation according to one of the preceding claims, **characterized in that** the installation has an elongate, tunnel-like form with a considerably greater length than diameter.

14. Installation according to one of the preceding claims, **characterized in that** the installation is arranged as a soldering installation in cooperation with a roll train, with the workpiece being an endless flat tube which can be shaped on the roll train from at least one endless solder-coated sheet-metal strip to form the flat tube and which can be conducted through the soldering installation, with the soldering taking place before individual heat-exchanger tubes are cut off.

15. Process for soldering or for the heat-treatment of workpieces in a protective gas atmosphere, carried out in an installation into which are conducted - separately from one another - a combustion gas flow (B) and a gas flow (S) which is heated by the combustion gas flow, **characterized in that** the combustion gas flow (B) and the gas flow (S) are conducted into the installation in opposite flow directions and are placed in heat-exchanging contact such that, firstly, the emerging burned combustion gas (waste gas) pre-heats the inflowing gas (S) and such that, secondly, the emerging gas (S) pre-heats the inflowing combustion gas (B) .

16. Process according to Claim 15, **characterized in that** the combustion gas flow, for example a combustion gas mixture, is brought into contact with a catalytic converter (K).

17. Process according to Claims 15 and 16, **characterized in that** the protective gas flow is conducted into a first pipe (10) and **in that** the combustion gas flow is conducted into an annular chamber between the first pipe and a second pipe (20) of the installation.

18. Process according to Claims 15 and 16, **characterized in that** the protective gas flow is firstly conducted into a third pipe (30) which surrounds the second pipe (20), and is conducted into the first pipe (10) only at an approximately central position of the installation.

19. Process according to Claims 15-18, **characterized in that** the consumed protective gas flow emerging from the installation is recirculated to the inlet into the installation.

20. Process according to one of the preceding Claims 15-19, **characterized in that** at least constituents of the consumed protective gas flow are added to the combustion gas mixture.

## Revendications

1. Système de brasage ou de traitement thermique de pièces (1) sous une atmosphère gazeuse, avec un dispositif de transport de pièces (2) comportant une entrée (3) dans le système et une sortie (4) hors du système, avec un courant de gaz combustible ou de chauffage (B) mené séparément du courant de gaz (S), qui porte le courant de gaz (S) à la température de travail et avec une isolation (5) entourant le système, **caractérisé en ce que** le courant de gaz combustible ou de chauffage (B) et le courant de gaz (S) présentent des capacités thermiques se correspondant sensiblement et peuvent être conduits à contre-courant dans le système sur une partie importante de la longueur du système.

2. Système selon la revendication 1, **caractérisé en ce que** le courant de gaz parcourant le système est de préférence un courant de gaz protecteur (S), qui peut de préférence être ramené à l'entrée (3).

3. Système selon la revendication 1 et 2, **caractérisé en ce qu'**au moins des composants du courant de gaz protecteur consommé (S) peuvent être ajoutés au mélange de gaz combustible (B).

4. Système selon la revendication 1 et/ou 2, **caractérisé en ce que** le système présente au moins deux tubes (10, 20) disposés l'un dans l'autre, dans lequel le courant de gaz protecteur (S) circule dans le premier tube (10) et le courant de gaz combustible (B) circule dans une chambre annulaire (15) entre le premier tube (10) et le deuxième tube (20).

5. Système selon la revendication 4, **caractérisé en ce qu'**au moins le premier tube (10) présente une paroi tubulaire (11) bonne conductrice de la chaleur.

6. Système selon l'une quelconque des revendications précédentes, **caractérisé en ce que** l'isolation (5) entoure indirectement ou directement le deuxième tube (20) ou un troisième tube (30).

7. Système selon les revendications 1 et 6, **caractérisé en ce que** le troisième tube (30) sert pour le préchauffage du gaz protecteur (S) et pour l'introduction du gaz protecteur dans le premier tube (10).

8. Système selon l'une quelconque des revendications précédentes, **caractérisé en ce qu'**il se trouve dans la chambre annulaire (15) un catalyseur (K), sur lequel se produit la combustion du mélange de gaz combustible (B).

9. Système selon la revendication 8, **caractérisé en ce que** la position du catalyseur (K) dans la chambre annulaire (15) est variable.

10. Système selon l'une quelconque des revendications précédentes, **caractérisé en ce que** le dispositif de transport de pièces (2) et la partie de traitement pour les pièces (1) sont disposés dans le tube intérieur (10).

11. Système selon l'une quelconque des revendications précédentes, **caractérisé en ce que** le dispositif de transport de pièces (2) se compose de jeux de rouleaux, convenant pour transporter les pièces (1) et par exemple les rassembler pour le brasage.

12. Système selon l'une quelconque des revendications précédentes, **caractérisé en ce que** la direction de transport des pièces est choisie à contre-courant par rapport au courant de gaz combustible (B).

13. Système selon l'une quelconque des revendications précédentes, **caractérisé en ce que** le système présente une forme allongée en tunnel, avec une longueur beaucoup plus grande que son diamètre.

14. Système selon l'une quelconque des revendications précédentes, **caractérisé en ce que** le système est disposé sous la forme d'un système de brasage en coopération avec un train de rouleaux, dans lequel la pièce est un tube plat sans fin, qui est déformable en un tube plat, sur le train de rouleaux, à partir d'au moins un ruban de tôle sans fin revêtu de brasure, et qui peut être conduit à travers le système de brasage, dans lequel on effectue le brasage avant de découper des tubes individuels d'échangeur de chaleur.

15. Procédé de brasage ou de traitement thermique de pièces sous une atmosphère de gaz protecteur, exécuté dans un système dans lequel on introduit un courant de gaz combustible (B) et - séparément de celui-ci - un courant de gaz (S), qui est chauffé par le courant de gaz combustible, **caractérisé en ce que** l'on introduit dans le système le courant de gaz combustible (B) et le courant de gaz (S) avec des directions d'écoulement opposées et on les place ainsi dans une relation d'échange de chaleur, de telle manière que d'une part le gaz combustible brûlé (gaz d'échappement) sortant préchauffe le gaz (S) entrant et que d'autre part le gaz (S) sortant préchauffe le gaz combustible (B) entrant.

16. Procédé selon la revendication 15, **caractérisé en ce que** l'on met en contact le courant de gaz combustible, par exemple un mélange de gaz combustible, avec un catalyseur (K).

17. Procédé selon les revendications 15 et 16, **caractérisé en ce que** l'on introduit le courant de gaz protecteur dans un premier tube (10) et **en ce que** l'on introduit le courant de gaz combustible dans une chambre annulaire entre le premier tube (10) et un deuxième tube (20) du système.

18. Procédé selon les revendications 15 et 16, **caractérisé en ce que** l'on introduit le courant de gaz protecteur d'abord dans un troisième tube (30), qui entoure le deuxième tube (20), et on ne l'introduit qu'ensuite dans le premier tube (10) dans une position sensiblement médiane du système.

19. Procédé selon les revendications 15 - 18, **caractérisé en ce que** l'on renvoie à l'entrée du système le courant de gaz protecteur consommé, sortant du système.

20. Procédé selon l'une quelconque des revendications précédentes 15 - 19, **caractérisé en ce que** l'on ajoute au mélange de gaz combustible au moins des composants du courant de gaz protecteur consommé.
